# EUROPEAN PATENT SPECIFICATION

(11) **EP 4 337 926 B1**
(45) Date of publication and mention of the grant of the patent: **29.10.2025**
(21) Application number: 22723154.5
(22) Date of filing: 05.05.2022
(51) Int. Cl.: G01H 3/04, G01S 7/35, G01S 7/41, G01S 13/34, G01S 13/42, G01S 13/50, G01S 13/89, G01S 13/02

(54) **VIBRATION MEASUREMENTS OF OBJECTS**
VIBRATIONSMESSUNGEN VON OBJEKTEN
MESURES DE VIBRATION D'OBJETS

(30) Priority: 10.05.2021 FI 20215547
(43) Date of publication of application: 20.03.2024
(73) Proprietor: Teknologian tutkimuskeskus VTT Oy, 02150 Espoo (FI)
(72) Inventor: KIURU, Tero, 02150 Espoo (FI); KORKALO, Otto, 02150 Espoo (FI); FORSTEN, Henrik, 02150 Espoo (FI); PURSULA, Pekka, 02150 Espoo (FI); KEMPPI, Paul, 02150 Espoo (FI); ARASALO, Ossi, 02150 Espoo (FI)
(74) Representative: Laine IP Oy
(86) International application number: PCT/FI2022/050299
(87) International publication number: WO 2022/238617

(56) References cited:
- EP-A1- 1 936 402
- EP-A1- 3 654 058
- ALIZADEH MOSTAFA ET AL: "Remote Monitoring of Human Vital Signs Using mm-Wave FMCW Radar", IEEE ACCESS, vol. 7, 6 May 2019 (2019-05-06), pages 54958 - 54968, XP011723382, DOI: 10.1109/ACCESS.2019.2912956

## Description

### FIELD

Embodiments of the present invention relate in general to vibration measurements and more specifically to vibration measurements of objects.

### BACKGROUND

Vibration measurements are one of the most important measurements for example in industrial machines in general. Such measurements may be performed using contacting sensors, like accelerometers. Alternatively, a non-contacting high-speed camera or laser-based non-contacting methods may be used, but such solutions may be very expensive, require dedicated hardware and/or require a trained user. Also, optical methods may be problematic in challenging environments, for example when there is water vapour in the measurement space. There is therefore a need to provide an improved apparatus, method and computer program for performing vibration measurements.

ALIZADEH MOSTAFA ET AL: "Remote Monitoring of Human Vital Signs Using mm-Wave FMCW Radar", IEEE ACCESS, vol. 7, pages 54958-54968, use a frequency modulated continuous wave (FMCW) radar operating at 77 GHz in a bedroom environment to extract the respiration and heart rates of a patient, who is used to lying down on the bed.

In EP 3 654 058 A1, it is proposed that angular resolution of radars may be improved by exploiting mirroring for generating at least one mirrored version of a received signal based on a first and a second version of the received signal.

### SUMMARY OF THE INVENTION

In order to address the shortcomings of the prior art, a method according to claim 1 and an apparatus according to claim 13 are provided. Advantageous embodiments are defined in the dependent claims.

According to a first aspect of the present invention, there is provided a method
for performing vibration measurements, comprising determining, by a radar apparatus,
an initial set of measurement results, wherein said initial set of measurements results comprises at least angles-of-arrivals and phases of initial reflected signals, the initial reflected signals being reflections of initial signals transmitted by a radar in a field of view of the radar, determining, by the radar apparatus,
a phase map of the field of view of the radar, wherein the phase map comprises at least phase differences between the initial transmitted signals and the initial reflected signals as a function of said angles-of-arrivals of the initial reflected signals and determining, by the radar apparatus,
a vibration map of the field of view of the radar based at least on the phase map.

According to a second aspect of the present invention, there is provided an apparatus comprising a processor, wherein the processor is configured to determine an initial set of measurement results, wherein said initial set of measurements results comprises at least angles-of-arrivals and phases of initial reflected signals, the initial reflected signals being reflections of initial signals transmitted by a radar in a field of view of the radar, determine a phase map of the field of view of the radar, wherein the phase map comprises at least phase differences between the initial transmitted signals and the initial reflected signals as a function of angles-of-arrivals of the initial reflected signals and determine a vibration map of the field of view of the radar based at least on the phase map.

According to a third aspect of the present invention, there is provided a computer program product, embodied on a non-transitory computer readable medium, configured to control an apparatus according to the second aspect of the invention to perform a method according to the first aspect of the invention.

### BRIEF DESCRIPTION OF THE DRAWINGS

FIGURE 1 illustrates operation of a radar in accordance with at least some embodiments of the present invention;
FIGURE 2 illustrates an example of a vibration map in accordance with at least some embodiments of the present invention;
FIGURE 3 illustrates a flow graph of a method in accordance with at least some embodiments of the present invention;
FIGURE 4a illustrates a time-domain signal in accordance with at least some embodiments of the present invention;
FIGURE 4b illustrates a Fourier transformed signal in accordance with at least some embodiments of the present invention;
FIGURE 5 illustrates an example apparatus capable of supporting at least some embodiments of the present invention.

### EMBODIMENTS

Vibration measurements may be improved by the procedures described herein. More specifically, in accordance with embodiments of the present invention, vibration measurements may be performed using a radar. Initial regular measurements may be performed by the radar, such as a Frequency-Modulated Continuous Wave, FMCW, radar. A phase map of a field of view of the radar may be then determined based on the initial regular measurements. Moreover, the phase map may be exploited to determine a vibration map, which may for example show a vibration frequency of an object if the object is within a field of view of the radar. In some embodiments, other measurements may be performed to enhance the accuracy. For instance, subsequent regular measurements may be performed to enhance the accuracy, at least when the vibration frequency of the object is lower than a threshold. Alternatively, or in addition, Doppler-frequency measurements may be exploited to enable vibration measurements when the vibration frequency is higher than the threshold.

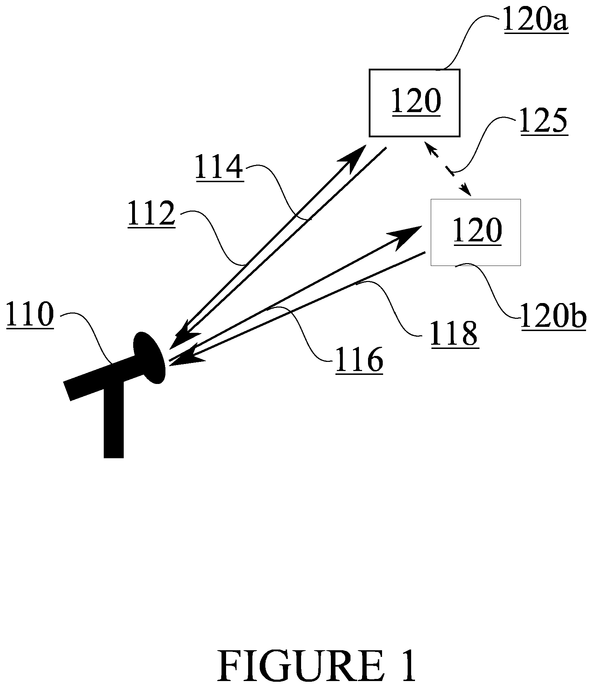

FIGURE 1 illustrates operation of a radar system in accordance with at least some embodiments of the present invention. The exemplary radar system of FIGURE 1 may comprise radar 110 and object 120. Radar 110 may be a 3D imaging radar sensor for example. Object 120 may be a vibrating object, such as a beam. Naturally, object 120 may be any other suitable object detectable by radar 110 as well, and the embodiments of the present invention are not limited to any specific object 120. Object 120 may be referred to as a target as well. In some embodiments, a radar apparatus may refer to radar 110 or to a control device configured to control radar 110, possibly when installed therein, or remotely.

Radar 110 may be used for detecting various objects by exploiting characteristics of electromagnetic signals. For example, a distance and direction to object 120 may be estimated using radar 110. In addition, radar 110 may be utilized for estimating a vibration frequency of the object 120. Radar 110 may for example use radio waves at frequencies ranging from 30 Hz to 300 GHz. Thus, radar 110 may be capable of sensing in all environmental conditions, such as, in direct sunlight, darkness, smoke, rain or dust.

Radar 110 may comprise a transmitter configured to transmit electromagnetic signals over air interface via at least one transmit antenna. In some embodiments, the at least one transmit antenna may comprise at least two antennas, such as a microstrip antennas or a subarray, which may be used for radiating different electromagnetic signals. For example, multiple transmit antennas may be arranged in columns and/or rows, i.e., vertically and/or horizontally, to form the transmit antenna array and multiple transmit channels correspondingly. In some embodiments, the at least one transmit antenna may be used for receiving as well.

Radar 110 may comprise a receiver configured to receive reflected electromagnetic signals over air interface via at least one receive antenna. In some embodiments, the at least one receive antenna may also comprise at least two receive antennas, such as microstrip antennas or a subarray, which may be used for receiving different versions of reflected signals. If the at least one receive antenna comprises at least two receive antennas, said at least two receive antennas may form a receive antenna array and multiple receive channels correspondingly.

In some embodiments, radar 110 may be a FMCW, radar. In case of a FMCW radar, the transmitter may transmit more than one electromagnetic signal with the same transmission power but change a frequency of transmission during the process. That is, the FMCW radar may exploit frequency modulation. Alternatively, in some embodiments, radar 110 may be a pulse radar or an Orthogonal Frequency Division Multiplexing, OFDM, radar, or any other suitable arbitrary waveform radar. Regular measurements may refer to FMCW measurements or any other suitable measurements, wherein distance is measured.

Electromagnetic signals transmitted by radar 110 may hit object 120 and thus get reflected back to radar 110. For instance, initial electromagnetic signal 112 may be transmitted by radar 110, hit object 120 at location 120a and get reflected back to radar 110 as initial reflected electromagnetic signal 114. Reflected electromagnetic signals may hence be referred to as echo signals as well in general.

Initial set of regular measurement results may be collected by radar 110 by measuring at least angles-of-arrivals and phases of multiple initial reflected signals 114 within the field of view of radar 110, and possibly amplitudes as well. That is, initial reflected signals 114 may be reflections of initial signals 112 transmitted by radar 110 in the field of view of the radar 110. Said initial set of regular measurement results may be from a one-shot measurement of radar 110. The one-shot measurement is not a continuous measurement but the one-shot measurement comprises transmission of a single signal burst to each direction within the field of view of the radar 110.

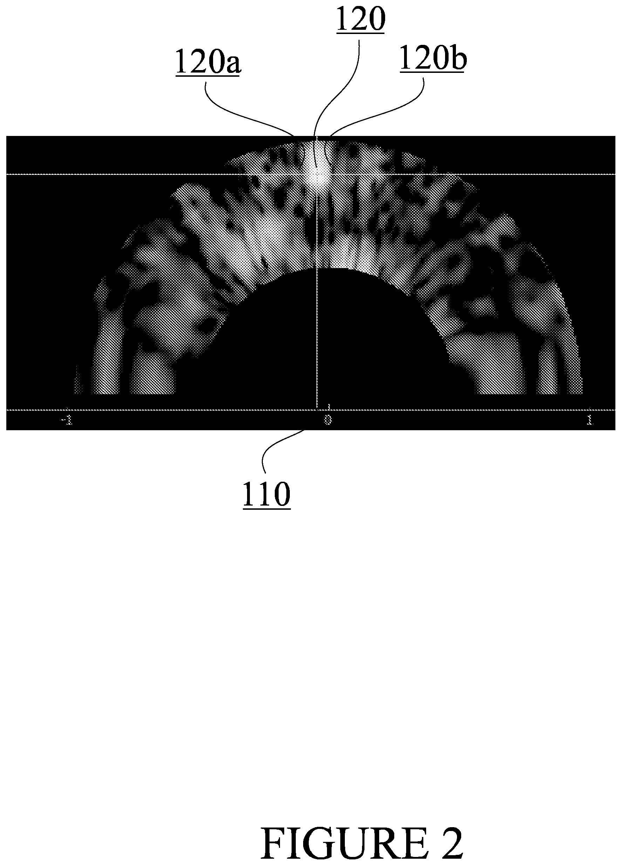

A phase map of the field of view of the radar 110 may be then determined, wherein the phase map comprises at least phase differences between initial transmitted signals 112 and initial reflected signals 114 as a function of said angles-of-arrivals of initial reflected signals 114. Furthermore, the vibration map of the field of view of the radar 110 may be determined based at least on the determined phase map. FIGURE 2 illustrates an example of the vibration map, wherein object 120 vibrates between first location 120a and second location 120b.

In some embodiments, at some point after transmitting initial electromagnetic signals 112, radar 110 may transmit at least one subsequent electromagnetic signal 116 over air interface. Again, at least one subsequent electromagnetic signal 116 transmitted by radar 110 may hit object 120, possibly in different location 120b, and get reflected back to radar 110 as subsequent reflected electromagnetic signal 118. At least one subsequent set of regular measurement results may be then determined, wherein the at least one subsequent set of regular measurements results comprises at least angles-of-arrivals and phases of subsequent reflected signals 118, and possibly amplitudes as well.

Initial signals 112 and subsequent signals 116 are transmitted at different times. Object 120 may thus move, or vibrate, from first location 120a to second location 120b between transmissions of initial signals 112 and subsequent electromagnetic signals 116 such that initial reflected signal 114 may be reflected from object 120 when object 120 is in first location 120a and subsequent reflected signal 118 may be reflected from object 120 when object 120 is in second location 120b. Object 120 may further vibrate between locations 120a and 120b during additional, subsequent measurements. Distance between locations 120a and 120b is denoted by 125 in FIGURE 1. That is, vibration distance of object 120 is denoted by 125.

The phase map of the field of view of radar 110 may be then determined, the phase map comprising at least phase differences between reflected signals 114 and 118 as a function of said angles of reflected signals 114 and 118. The vibration map of the field of view of radar 110 may be determined based at least on the phase map. By measuring multiple phase maps, i.e., angle maps of the surroundings, the change rate in the motion, i.e., vibration, of object 120 may be determined. Consequently, the vibration frequency of object 120 may be determined as well. The phase map may be formed as a 2D or a 3D image, depending on an antenna configuration of radar 110.

In order to measure vibration accurately, radar 110 needs to take images faster than object 120 is vibrating or moving. According to the Nyquist sampling theorem, the measurement speed needs to be at least 2 times faster than the vibration frequency in order to get unambiguous results. This measurement speed may be for example in the range of kilohertz or tens of kilohertz, which may create a problem for measuring much higher vibration frequencies above a threshold, such as 30 kilohertz. Measuring of frequencies higher than the sampling frequency is possible, but alias frequencies may be an issue in such a case. For instance, if the repetition frequency of radar 110 is 10 kHz and object 120 vibrates at a frequency of 7.5 kHz, alias frequency would be 2.5 kHz in the measurements. If it is possible to determine approximately the correct vibration frequency, it may be determined that the measured 2.5 kHz is aliased 7.5 kHz vibration.

Thus, in some embodiments, there may be two measurement modes. In a regular measurement mode, such as a FMCW mode, frequency sweeps may be transmitted to measure at least angles-of-arrivals and phases of received initial reflected signals 114. Alternatively, or in addition, in a Doppler-frequency measurement mode signal may be transmitted using constant frequency. Doppler-frequency measurement does not give distance and may work only with objects which vibrate quickly, as the frequency of the Doppler shift is not large enough for slowly vibrating objects. In practice the Dopplermeasurement may be the same as the regular measurement, but the frequency sweep may be 0 Hz and the sweep is longer.

The measurement mode of the radar 110 may be changed if the vibration frequency of object 120 is higher than the threshold. Once the phase map has been determined the measurement mode of radar 110 may be changed in such a way that every receive channel provides the Doppler-frequency of objects as a function of angles-of-arrival. In some embodiments, the measurement mode may be changed by default, e.g., radar 110 may be configured to change the measurement mode regardless of the situation. Alternatively, the measurement mode may be changed depending on the situation, for example when the results are not good enough (below a threshold) or manually by a user, whenever needed.

Hence, a 1D or 2D map of the surroundings may be determined based on Doppler-frequency measurements without distance information to object 120 but for every angle-of-arrival, the Doppler-frequency may be determined. The Doppler-frequency may be defined as a difference between a frequency of a signal transmitted towards object 120 and a frequency of a signal reflected from object 120 in response. Frequencies measured with Doppler-measurements may be associated with a certain object and/or distance, for example with a certain angle of direction once the distance has been determined.

So, as an alternative or in addition to performing said subsequent regular measurements, Doppler-frequency measurements may be performed after collecting the initial set of regular measurement results. In such a case, the phase map may be determined based at least on the phases and amplitudes of initial reflected signals 114, and possibly subsequent reflected signals 118, and the vibration map of the field of view of the radar may be determined based on the phase map and a set of Doppler-frequency measurement results. The use of Doppler-frequency measurements enables measuring higher vibration frequencies.

That is, radar 110 may be used in two different modes. First, radar 110 may measure the environment for the phase map, such as a 3D image, using for example a FMCW radar with digital beamforming. Then, radar 110 may measure a Doppler signature map of the environment using a constant transmit frequency. The phase map and the Doppler signature map may be overlaid to produce a 3D vibration map of the environment. It is also possible to get the vibration profile up to a few kHz or tens of kHz without the Doppler approach but the Doppler approach allows vibration measurements up to very high frequencies, for example to hundreds of megahertz.

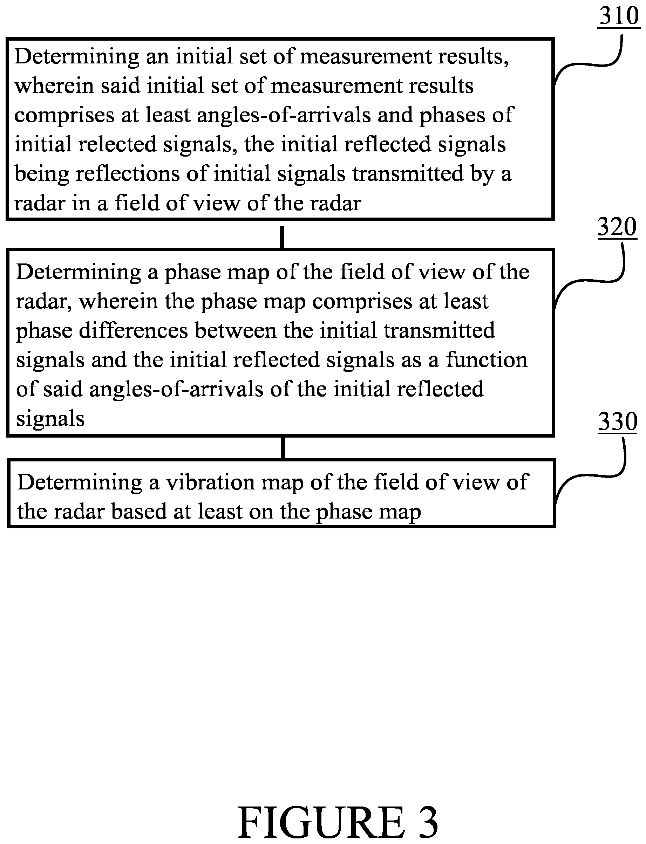

FIGURE 3 illustrates a flow graph of a method in accordance with at least some embodiments of the present invention. The phases of the illustrated method may be performed by a radar apparatus, like radar 110 or a control device configured to control the functioning of radar 110, possibly when installed therein, or remotely.

The method may comprise, at step 310, determining an initial set of measurement results, wherein said initial set of measurements results comprises at least angles-of-arrivals and phases of initial reflected signals 114, initial reflected signals 114 being reflections of initial signals 112 transmitted by radar 110 in the field of view of radar 110. Said initial set of measurement results may be from a one-shot measurement of radar 110. In some embodiments, said initial set of measurement results may comprise information about amplitudes of initial reflected signals 114, which is particularly useful if Doppler-frequency measurements are also performed.

The initial set of measurement results may be referred to as an initial set of regular measurements results. In general, in case of regular measurements, such FMCW measurements, pulses need to be short so that multiple pulses can be transmitted in a second. For instance, one FMCW sweep may provide phases of objects at each distance and vibration measurements require multiple sweeps. In case of Doppler-measurements the pulses need to be long because the frequency of the Doppler-shift is small. Longer pulses enable identification of slower vibrations. Frequency resolution is also improved with a longer pulse. The use of the Doppler-measurements makes it possible to get vibration frequencies during one sweep and alias frequencies will not be an issue.

In some embodiments, at least one other set of measurement results may be determined, such as a subsequent set of regular measurement results. The at least one subsequent set of regular measurements results may comprise at least angles-of-arrivals and phases of subsequent reflected signals 118, subsequent reflected signals 118 being reflections of subsequent signals 116 transmitted by radar 110 in the field of view of radar 110.

Alternatively, or in addition, the at least one other set of measurement results may comprise a set of Doppler-frequency measurement results. The set of Doppler-frequency measurement results may be determined and comprise information about Doppler-frequencies as a function of said angle-of-arrivals. The set of Doppler-frequency measurement results may be from a continuous measurement performed by radar 110. The continuous measurement may for example comprise a transmission of a single pulse which is longer in time than the one-shot measurement. So in general, at least one other set of measurement results may be determined, wherein the at least one other set of measurement results comprises a subsequent set of regular measurement results and/or set of Doppler-frequency measurement results.

The method may further comprise, at step 320, determining a phase map of the field of view of radar 110, wherein the phase map comprises at least phase differences between initial transmitted signals 112 and initial reflected signals 114 as a function of said angles-of-arrivals of initial reflected signals 114. In some embodiments, said initial set of regular measurement results may comprise information about amplitudes of initial reflected signals 114 and in such a case distance information may be determined based on said amplitudes. The phase map comprising said distance information as a function of said angles-of-arrivals of initial reflected signals 114 may be then determined. Lower amplitude indicates longer distance while higher amplitude indicates shorter distance from radar 110 to object 120.

In some embodiments, the phase map may hence comprise two different kinds of information about object 120, like said amplitudes (how well the target reflects radar signal) and phases of the signals, which gives information about vibration of object 120. Vibration may refer to movement, which is so small that it is not shown in the amplitude map, but only in phase of received electromagnetic signals. With for example 60 GHz signal, 5 mm vibration of the target leads to a change of 720 degrees in phase. Embodiments of the present invention enable measuring even changes less than 1 degree, to enable submicrometre vibration in amplitude measurement.

In some embodiments, if the at least one other set of measurement results is determined, the phase map may be determined additionally based on the at least one other set of measurement results. If subsequent regular measurements are performed, the phase map comprising at least phase differences between initial reflected signals 114 and subsequent reflected signals 118 as a function of said angles-of-arrivals may be determined. Moreover, in some embodiments, the phase map of the field of view of the radar 110 may comprise amplitudes of subsequent reflected signals 118 as well.

Finally, at step 330, the method may comprise determining the vibration map of the field of view of radar 110 based at least on the phase map. In some embodiments, the vibration map may comprise information about a vibration frequency of object 120 in the field of view of radar 110. If Doppler-frequency measurements are not performed, the phase map is the same as the vibration map, i.e., the phase map may be set as the vibration map. A Fourier transformation of the phase map be performed to get vibration frequencies at every angle-distance point. Doppler-frequency measurements give vibration frequencies only as a function of angles, but no distance information. The vibration map may be presented on a display.

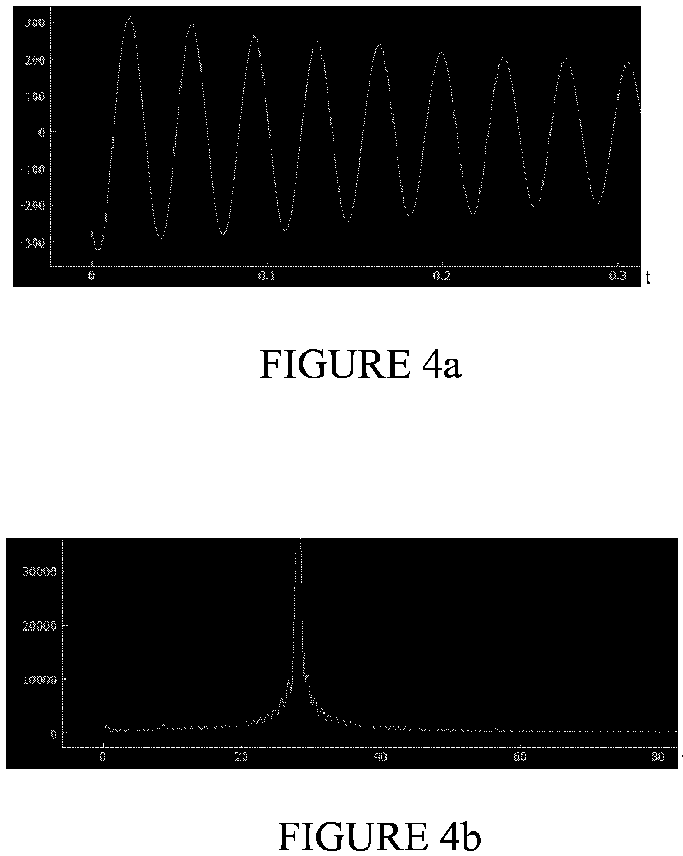

In some embodiments, a Fourier transform may be performed to a time-domain signal comprising said initial set of measurement results and the vibration frequency of object 120 may be detected from the Fourier transformed signal. The time-domain signal is illustrated in FIGURE 4a while the Fourier transformed signal is shown in FIGURE 4b. The vibration frequency of object 120 may be detected, e.g., by detecting a peak above a threshold from the Fourier transformed signal.

In some embodiments, the set of Doppler-frequency measurement results may be determined, wherein the set of Doppler-frequency measurement results comprises information about Doppler-frequency as a function of angles-of-arrival and the vibration map may be then determined based on the phase map and the set of Doppler-frequency measurement results, e.g., by overlaying a 3D image comprising the phase map and a 2D image comprising the set of Doppler-frequency measurement results, and displaying the combined image. That is, the vibration map may be in general determined additionally based on the at least one other set of measurement results, wherein the at least one other set of measurement results comprises a subsequent set of regular measurement results and/or a set of Doppler-frequency measurement results.

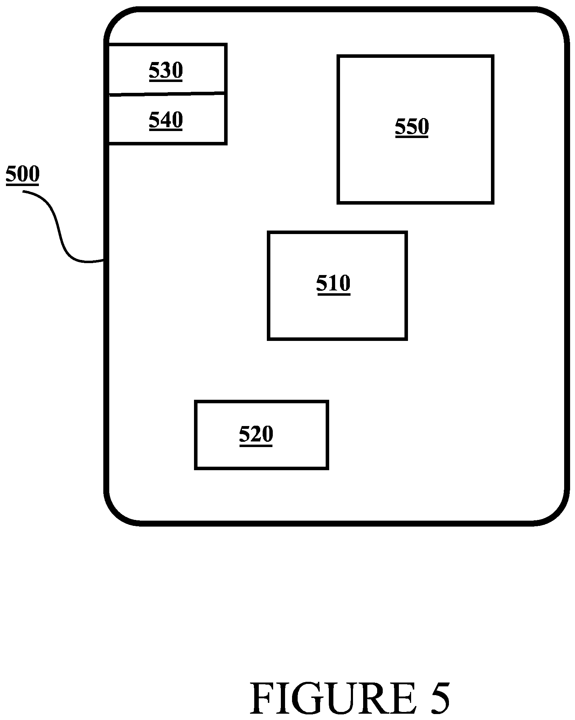

FIGURE 5 illustrates an example apparatus capable of supporting at least some embodiments of the present invention. Illustrated is apparatus 500, such as a radar apparatus which may be radar 110 or a control device configured to control the functioning of the radar 110, possibly when installed therein, or remotely. Comprised in apparatus 500 may be processing unit, i.e., processing element, 510, which may further comprise, for example, a single- or multi-core processor wherein a single-core processor comprises one processing core and a multi-core processor comprises more than one processing core. Processing unit 510 may comprise, in general, a control device. Processing unit 510 may comprise one or more processors. Processing unit 510 may be a control device. Processing unit 510 may comprise for example at least one Application-Specific Integrated Circuit, ASIC, and/or at least one Field-Programmable Gate Array, FPGA. Processing unit 510 may be means for performing method steps in apparatus 500, like determining, performing and detecting. Processing unit 510 may be configured, at least in part by computer instructions, to perform said actions.

Apparatus 500 may comprise memory 520. Memory 520 may comprise Random-Access Memory, RAM, and/or permanent memory. Memory 520 may comprise at least one RAM chip. Memory 520 may comprise solid-state, magnetic, optical and/or holographic memory, for example. Memory 520 may be at least in part accessible to processing unit 510. Memory 520 may be at least in part comprised in processing unit 510. Memory 520 may be means for storing information, such as a phase and amplitude of a reflected signal. Memory 520 may comprise computer instructions that processing unit 510 is configured to execute. When computer instructions configured to cause processing unit 510 to perform certain actions are stored in memory 520, and apparatus 500 overall is configured to run under the direction of processing unit 510 using computer instructions from memory 520, processing unit 510 and/or its at least one processing core may be considered to be configured to perform said certain actions. Memory 520 may be at least in part comprised in processing unit 510. Memory 520 may be at least in part external to apparatus 500 but accessible to apparatus 500.

Apparatus 500 may comprise, or be configured to control, a transmitter 530. The transmitter 530 may comprise at least one transmit antenna, or the transmitter 530 may be connectable to the at least one transmit antenna. If apparatus 500 is a control device for radar 110, the transmitter 530 may be connectable to radar 110 or to the at least one antenna via radar 110. If apparatus 500 and radar 110 are within the same device, the transmitter 530 may enable transmissions within said device.

Apparatus 500 may also comprise, or be configured to control, a receiver 540. The receiver may comprise at least one receive antenna, or the receiver may be connectable to the at least one receive antennas. If apparatus 500 is a control device for the radar 110, the receiver 530 may be connectable to the radar 110 or to the at least one antenna via radar 110. If apparatus 500 and radar 110 are within the same device, the receiver 540 may enable transmissions within said device.

Apparatus 500 may also comprise, or be configured to control, a user interface, UI, 550. UI 550 may comprise at least a display or a touchscreen. A user may be able to operate apparatus 500 via UI 550. Also, UI 550 may be used for displaying information to the user. For example, UI 550 may be used for providing, i.e., displaying, the vibration map.

Processing unit 510 may be furnished with a transmitter arranged to output information from processing unit 510, via electrical leads internal to apparatus 500, to other devices comprised in apparatus 500. Such a transmitter may comprise a serial bus transmitter arranged to, for example, output information via at least one electrical lead to memory 520 for storage therein. Alternatively to a serial bus, the transmitter may comprise a parallel bus transmitter. Likewise processing unit 510 may comprise a receiver arranged to receive information in processing unit 510, via electrical leads internal to apparatus 500, from other devices comprised in apparatus 500. Such a receiver may comprise a serial bus receiver arranged to, for example, receive information via at least one electrical lead from receiver 540 for processing in processing unit 510. Alternatively to a serial bus, the receiver may comprise a parallel bus receiver.

Processing unit 510, memory 520, transmitter 530, receiver 540 and/or UI 550 may be interconnected by electrical leads internal to apparatus 500 in a multitude of different ways. For example, each of the aforementioned devices may be separately connected to a master bus internal to apparatus 500, to allow for the devices to exchange information. However, as the skilled person will appreciate, this is only one example and depending on the embodiment various ways of interconnecting at least two of the aforementioned devices may be selected without departing from the scope of the present invention

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

In an embodiment, a radar apparatus, such as, for example, radar 110 or a control device for controlling radar 110, may comprise means for carrying out the embodiments described above and any combination thereof.

In an embodiment, a computer program may comprise instructions which, when the program is executed by an apparatus, cause the apparatus to carry out in accordance with the embodiments described above and any combination thereof. In an embodiment, a computer program product, embodied on a non-transitory computer readable medium, may be configured to control a processing unit to perform a process comprising the embodiments described above and any combination thereof.

In an embodiment, an apparatus, such as, for example, radar 110 or a control device for controlling radar 110, may comprise at least one processing unit, and at least one memory including computer program code, wherein the at least one memory and the computer program code are configured to, with the at least one processing unit, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the scope of the invention, as defined by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in vibration measurements.

### ACRONYMS LIST

- ASIC: Application-Specific Integrated Circuit
- FMCW: Frequency-Modulated Continuous Wave
- FPGA: Field-Programmable Gate Array
- MIMO: Multiple-Input Multiple-Output
- OFDM: Orthogonal Frequency Division Multiplexing
- RAM: Random-Access Memory
- UI: User Interface

**REFERENCE SIGNS LIST**

| | |
|---|---|
| 110 | Radar |
| 112, 116 | Transmitted signals |
| 114, 118 | Reflected signals |
| 120 | Object |
| 120a, 120b | Locations of object 120 |
| 125 | Distance between locations 120a and 120b |
| 310 - 330 | Phases of the method of FIGURE 3 |
| 500 - 550 | Structure of the apparatus of FIGURE 5 |

## Claims

1. A method for performing vibration measurements, comprising:
- determining (310), by a radar apparatus (500), an initial set of measurement results, wherein said initial set of measurements results comprises at least angles-of-arrivals and phases of initial reflected signals (114), the initial reflected signals (114) being reflections of initial signals (112) transmitted by a radar (110) in a field of view of the radar (110);
- **characterized in that** the method further comprises determining (320), by the radar apparatus (500), a phase map of the field of view of the radar (110), wherein the phase map comprises at least phase differences between the initial transmitted signals (112) and the initial reflected signals (114) as a function of said angles-of-arrivals of the initial reflected signals (114); and
- determining (330), by the radar apparatus (110), a vibration map of the field of view of the radar (110) based at least on the phase map.

2. A method according to claim 1, wherein the vibration map comprises information about a vibration frequency of at least one object (120) in the field of view of the radar (110).

3. A method according to claim 2, further comprising:
- performing a Fourier transform to a time-domain signal comprising said initial set of measurement results; and
- detecting the vibration frequency of the at least one object (120) from the Fourier transformed signal.

4. A method according to any of the preceding claims, wherein said initial set of measurement results comprises amplitudes of the initial reflected signals (114) and the method further comprises:
- determining distance information based on said amplitudes; and
- determining the phase map, wherein the phase map comprises said distance information as a function of said angles-of-arrivals of the initial reflected signals (114).

5. A method according to any of the preceding claims, wherein said initial set of measurement results is from a one-shot measurement performed by the radar (110).

6. A method according to any of the preceding claims, further comprising:
- determining at least one subsequent set of measurement results, wherein the at least one subsequent set of measurements results comprises at least angles-of-arrivals and phases of subsequent reflected signals (118), the subsequent reflected signals (118) being reflections of subsequent signals (116) transmitted by the radar (110) after the initial signals (112) in the field of view of the radar (110); and
- determining the phase map, wherein the phase map comprises at least phase differences between the initial reflected signals (114) and the subsequent reflected signals (118) as a function of said angles-of-arrivals.

7. A method according to any of the preceding claims, further comprising:
- determining a set of Doppler-frequency measurement results, wherein the set of Doppler-frequency measurement results comprises information about Doppler-frequencies as a function of said angles-of-arrivals; and
- determining the vibration map of the field of view of the radar by combining the phase map and the set of Doppler-frequency measurement results.

8. A method according to claim 7, wherein the set of Doppler-frequency measurement results is from a continuous measurement, the continuous measurement comprising a transmission of a single pulse.

9. A method according to any of the preceding claims, further comprising:
- upon determining said initial set of measurement results, changing a measurement mode of the radar to a Doppler-frequency measurement mode.

10. A method according to claim 9, further comprising:
- detecting that the vibration frequency of the at least one object (120) is above a threshold; and
- responsive to said detection, changing the measurement mode of the radar to the Doppler-frequency measurement mode.

11. A method according to any of claims 7 to 10, wherein Doppler-frequency measurements are performed using a constant frequency.

12. A method according to any of the preceding claims, further comprising:
- presenting the vibration map on a display as an image.

13. An apparatus (500) comprising a processor (510), wherein the processor (510) is configured to:
- determine an initial set of measurement results, wherein said initial set of measurements results comprises at least angles-of-arrivals and phases of initial reflected signals (114), the initial reflected signals (114) being reflections of initial signals (112) transmitted by a radar (110) in a field of view of the radar (110);
- **characterized in that** the processor (510) is further configured to determine a phase map of the field of view of the radar (110), wherein the phase map comprises at least phase differences between the initial transmitted signals (112) and the initial reflected signals (114) as a function of said angles-of-arrivals of the initial reflected signals (114); and
- determine a vibration map of the field of view of the radar (110) based at least on the phase map.

14. An apparatus (500) according to claim 13, wherein the processor (510) is further configured to cause performance of a method according to any of claims 2 - 12.

15. A computer program comprising instructions which, when the program is executed by an apparatus (500) according to claim 13 or claim 14, cause the apparatus (500) to perform a method according to any of claims 1-12.

## Patentansprüche

1. Verfahren zum Durchführen von Vibrationsmessungen, umfassend:
- Bestimmen (310) durch eine Radareinrichtung (500) eines anfänglichen Satzes von Messergebnissen, wobei der anfängliche Satz von Messergebnissen mindestens Einfallswinkel und Phasen anfänglicher reflektierter Signale (114) umfasst, wobei die anfänglichen reflektierten Signale (114) Reflexionen anfänglicher Signale (112) sind, die von einem Radar (110) in einem Sichtfeld des Radars (110) gesendet werden;
- **dadurch gekennzeichnet, dass** das Verfahren weiter Bestimmen (320) durch die Radareinrichtung (500) einer Phasenkarte des Sichtfelds des Radars (110) umfasst, wobei die Phasenkarte mindestens Phasendifferenzen zwischen den anfänglichen gesendeten Signalen (112) und den anfänglichen reflektierten Signalen (114) in Abhängigkeit von den Einfallswinkeln der anfänglichen reflektierten Signale (114) umfasst; und
- Bestimmen (330) durch die Radareinrichtung (110) einer Vibrationskarte des Sichtfelds des Radars (110) mindestens basierend auf der Phasenkarte.

2. Verfahren nach Anspruch 1, wobei die Vibrationskarte Informationen über eine Vibrationsfrequenz von mindestens einem Objekt (120) im Sichtfeld des Radars (110) umfasst.

3. Verfahren nach Anspruch 2, weiter umfassend:
- Durchführen einer Fourier-Transformation an einem Zeitbereichssignal, das den anfänglichen Satz von Messergebnissen umfasst; und
- Erkennen der Vibrationsfrequenz des mindestens einen Objekts (120) aus dem Fourier-transformierten Signal.

4. Verfahren nach einem der vorstehenden Ansprüche, wobei der anfängliche Satz von Messergebnissen Amplituden der anfänglichen reflektierten Signale (114) umfasst und das Verfahren weiter umfasst:
- Bestimmen von Entfernungsinformationen basierend auf den Amplituden; und
- Bestimmen der Phasenkarte, wobei die Phasenkarte die Entfernungsinformationen in Abhängigkeit von den Einfallswinkeln der anfänglichen reflektierten Signale (114) umfasst.

5. Verfahren nach einem der vorstehenden Ansprüche, wobei der anfängliche Satz von Messergebnissen aus einer einmaligen Messung stammt, die vom Radar (110) durchgeführt wird.

6. Verfahren nach einem der vorstehenden Ansprüche, weiter umfassend:
- Bestimmen mindestens eines nachfolgenden Satzes von Messergebnissen, wobei der mindestens eine nachfolgende Satz von Messergebnissen mindestens Einfallswinkel und Phasen nachfolgender reflektierter Signale (118) umfasst, wobei die nachfolgenden reflektierten Signale (118) Reflexionen nachfolgender Signale (116) sind, die vom Radar (110) nach den anfänglichen Signalen (112) im Sichtfeld des Radars (110) gesendet werden; und
- Bestimmen der Phasenkarte, wobei die Phasenkarte mindestens Phasendifferenzen zwischen den anfänglichen reflektierten Signalen (114) und den nachfolgenden reflektierten Signalen (118) in Abhängigkeit von den Einfallswinkeln umfasst.

7. Verfahren nach einem der vorstehenden Ansprüche, weiter umfassend:
- Bestimmen eines Satzes von Dopplerfrequenz-Messergebnissen, wobei der Satz von Dopplerfrequenz-Messergebnissen Informationen über Dopplerfrequenzen in Abhängigkeit von den Einfallswinkeln umfasst; und
- Bestimmen der Vibrationskarte des Sichtfelds des Radars durch Kombinieren der Phasenkarte und des Satzes von Dopplerfrequenz-Messergebnissen.

8. Verfahren nach Anspruch 7, wobei der Satz von Dopplerfrequenz-Messergebnissen aus einer kontinuierlichen Messung stammt, wobei die kontinuierliche Messung Senden eines einzelnen Impulses umfasst.

9. Verfahren nach einem der vorstehenden Ansprüche, weiter umfassend:
- beim Bestimmen des anfänglichen Satzes von Messergebnissen, Ändern eines Messmodus des Radars in einen Dopplerfrequenz-Messmodus.

10. Verfahren nach Anspruch 9, weiter umfassend:
- Erkennen, dass die Vibrationsfrequenz des mindestens einen Objekts (120) über einem Schwellenwert liegt; und
- als Reaktion auf das Erkennen Ändern des Messmodus des Radars in den Dopplerfrequenz-Messmodus.

11. Verfahren nach einem der Ansprüche 7 bis 10, wobei Dopplerfrequenz-Messungen unter Verwendung einer konstanten Frequenz durchgeführt werden.

12. Verfahren nach einem der vorstehenden Ansprüche, weiter umfassend:
- Präsentieren der Vibrationskarte auf einem Display als Bild.

13. Einrichtung (500), die einen Prozessor (510) umfasst, wobei der Prozessor (510) konfiguriert ist, um:
- einen anfänglichen Satz von Messergebnissen zu bestimmen, wobei der anfängliche Satz von Messergebnissen mindestens Einfallswinkel und Phasen anfänglicher reflektierter Signale (114) umfasst, wobei die anfänglichen reflektierten Signale (114) Reflexionen anfänglicher Signale (112) sind, die von einem Radar (110) in einem Sichtfeld des Radars (110) gesendet werden;
- **dadurch gekennzeichnet, dass** der Prozessor (510) weiter konfiguriert ist, um eine Phasenkarte des Sichtfelds des Radars (110) zu bestimmen, wobei die Phasenkarte mindestens Phasendifferenzen zwischen den anfänglichen gesendeten Signalen (112) und den anfänglichen reflektierten Signalen (114) in Abhängigkeit von den Einfallswinkeln der anfänglichen reflektierten Signale (114) umfasst;
und
- eine Vibrationskarte des Sichtfelds des Radars (110) mindestens basierend auf der Phasenkarte zu bestimmen.

14. Einrichtung (500) nach Anspruch 13, wobei der Prozessor (510) weiter konfiguriert ist, um Durchführen eines Verfahrens nach einem der Ansprüche 2 - 12 zu veranlassen.

15. Computerprogramm, das Anweisungen umfasst, die, wenn das Programm von einer Einrichtung (500) nach Anspruch 13 oder Anspruch 14 ausgeführt wird, die Einrichtung (500) veranlassen, ein Verfahren nach einem der Ansprüche 1 - 12 durchzuführen.

## Revendications

1. Procédé de réalisation de mesures de vibrations, comprenant :
- la détermination (310), par un appareil radar (500), d'un ensemble initial de résultats de mesure, dans lequel ledit ensemble initial de résultats de mesure comprend au moins des angles d'arrivées et des phases de signaux réfléchis initiaux (114), les signaux réfléchis initiaux (114) étant des réflexions de signaux initiaux (112) transmis par un radar (110) dans un champ de vision du radar (110) ;
- **caractérisé en ce que** le procédé comprend en outre la détermination (320), par l'appareil radar (500), d'une carte de phase du champ de vision du radar (110), dans lequel la carte de phase comprend au moins des différences de phase entre les signaux transmis initiaux (112) et les signaux réfléchis initiaux (114) en fonction desdits angles d'arrivées des signaux réfléchis initiaux (114) ; et
- la détermination (330), par l'appareil radar (110), d'une carte de vibration du champ de vision du radar (110) sur la base au moins de la carte de phase.

2. Procédé selon la revendication 1, dans lequel la carte de vibration comprend des informations sur une fréquence de vibration d'au moins un objet (120) dans le champ de vision du radar (110).

3. Procédé selon la revendication 2, comprenant en outre :
- la réalisation d'une transformée de Fourier sur un signal temporel comprenant ledit ensemble initial de résultats de mesure ; et
- la détection de la fréquence de vibration du au moins un objet (120) à partir du signal à transformée de Fourier.

4. Procédé selon l'une quelconque des revendications précédentes, dans lequel ledit ensemble initial de résultats de mesure comprend des amplitudes des signaux réfléchis initiaux (114) et le procédé comprend en outre :
- la détermination d'informations de distance sur la base desdites amplitudes ;
et
- la détermination de la carte de phase, dans lequel la carte de phase comprend lesdites informations de distance en fonction desdits angles d'arrivées des signaux réfléchis initiaux (114).

5. Procédé selon l'une quelconque des revendications précédentes, dans lequel ledit ensemble initial de résultats de mesure provient d'une mesure unique réalisée par le radar (110).

6. Procédé selon l'une quelconque des revendications précédentes, comprenant en outre :
- la détermination d'au moins un ensemble ultérieur de résultats de mesure, dans lequel le au moins un ensemble ultérieur de résultats de mesure comprend au moins des angles d'arrivées et des phases de signaux réfléchis ultérieurs (118), les signaux réfléchis ultérieurs (118) étant des réflexions de signaux ultérieurs (116) transmis par le radar (110) après les signaux initiaux (112) dans le champ de vision du radar (110) ; et
- la détermination de la carte de phase, dans lequel la carte de phase comprend au moins des différences de phase entre les signaux réfléchis initiaux (114) et les signaux réfléchis ultérieurs (118) en fonction desdits angles d'arrivées.

7. Procédé selon l'une quelconque des revendications précédentes, comprenant en outre :
- la détermination d'un ensemble de résultats de mesure de fréquence Doppler, dans lequel l'ensemble de résultats de mesure de fréquence Doppler comprend des informations sur des fréquences Doppler en fonction desdits angles d'arrivées ; et
- la détermination de la carte de vibration du champ de vision du radar en combinant la carte de phase et l'ensemble de résultats de mesure de fréquence Doppler.

8. Procédé selon la revendication 7, dans lequel l'ensemble de résultats de mesure de fréquence Doppler provient d'une mesure continue, la mesure continue comprenant une transmission d'une seule impulsion.

9. Procédé selon l'une quelconque des revendications précédentes, comprenant en outre :
- après avoir déterminé ledit ensemble initial de résultats de mesure, le changement d'un mode de mesure du radar vers un mode de mesure de fréquence Doppler.

10. Procédé selon la revendication 9, comprenant en outre :
- le fait de détecter que la fréquence de vibration du au moins un objet (120) est supérieure à un seuil ; et
- en réponse à ladite détection, le changement du mode de mesure du radar vers le mode de mesure de fréquence Doppler.

11. Procédé selon l'une quelconque des revendications 7 à 10, dans lequel des mesures de fréquence Doppler sont réalisées en utilisant une fréquence constante.

12. Procédé selon l'une quelconque des revendications précédentes, comprenant en outre :
- la présentation de la carte de vibration sur un affichage en tant qu'image.

13. Appareil (500) comprenant un processeur (510), dans lequel le processeur (510) est configuré pour :
- déterminer un ensemble initial de résultats de mesure, dans lequel ledit ensemble initial de résultats de mesure comprend au moins des angles d'arrivées et des phases de signaux réfléchis initiaux (114), les signaux réfléchis initiaux (114) étant des réflexions de signaux initiaux (112) transmis par un radar (110) dans un champ de vision du radar (110) ;
- **caractérisé en ce que** le processeur (510) est en outre configuré pour déterminer une carte de phase du champ de vision du radar (110), dans lequel la carte de phase comprend au moins des différences de phase entre les signaux transmis initiaux (112) et les signaux réfléchis initiaux (114) en fonction desdits angles d'arrivées des signaux réfléchis initiaux (114) ;
et
- déterminer une carte de vibration du champ de vision du radar (110) sur la base au moins de la carte de phase.

14. Appareil (500) selon la revendication 13, dans lequel le processeur (510) est en outre configuré pour provoquer la mise en œuvre d'un procédé selon l'une quelconque des revendications 2-12.

15. Programme informatique comprenant des instructions qui, lorsque le programme est exécuté par un appareil (500) selon la revendication 13 ou la revendication 14, amènent l'appareil (500) à mettre en œuvre un procédé selon l'une quelconque des revendications 1-12.
